# EUROPEAN PATENT APPLICATION

(11) **EP 4 044 400 A1**
(43) Date of publication of application: **17.08.2022**
(21) Application number: 21465504.5
(22) Date of filing: 10.02.2021
(51) Int. Cl.: H02J 50/20, H04B 5/00

(54) **NEAR FIELD COMMUNICATION SYSTEM FOR POWER SUPPLY**

(71) Applicant: Continental Automotive Technologies GmbH, 30165 Hannover (DE)
(72) Inventor: Craciun, Serban, 81739 München (DE)
(74) Representative: Continental Corporation

(57) **Abstract**

A near field communication system comprises a near field communication controller (10), a first antenna (22) coupled to and controlled by the near field communication controller (10) and configured to generate an electromagnetic field having a frequency of 13.56MHz, a voltage regulator (12) configured to provide an operating voltage (V_{OP}) to the near field communication controller (10), a second antenna (26) arranged in the electromagnetic field generated by the first antenna (22), and an evaluation unit (14) coupled to the second antenna (26) and configured to determine a voltage induced in the second antenna (26) by the electromagnetic field generated by the first antenna (22). The evaluation unit (14) is configured to provide a feedback signal (S_{F}) to the voltage regulator (12), the feedback signal (S_{F}) being dependent on the voltage induced in the second antenna (26), the voltage regulator (12) is configured to vary the operating voltage (V_{OP}) based on the feedback signal (S_{F}), and the field strength of the electromagnetic field generated by the first antenna (22) depends on the operating voltage (V_{OP}).

## Description

The current invention relates to a near field communication system, in particular a near field communication system for a wireless charging device.

Many devices today can be charged wirelessly, i.e., inductively. That is, energy is transferred from a first device to a second device inductively. Usually a wireless charger base station generates an electromagnetic field by means of a first antenna. A portable device comprising a second antenna can be charged if the second antenna is arranged close to the first antenna (i.e., in the electromagnetic field).

Wireless charger base stations are often also able to communicate via near field communication (NFC). However, when a plurality of NFC targets (e.g., NFC tags or cards) are arranged in the electromagnetic field generated by the base station simultaneously or if one or more NFC targets are arranged in the electromagnetic field at the same time as a portable electronic device that is to be charged, the NFC reader arranged in the base station may not be able to reliably detect all NFC targets. When a plurality of NFC targets is present in the same electromagnetic field, each of the NFC targets receives a certain amount of energy from the electromagnetic field to supply the internal electronics of the respective NFC target. If several NFC targets are arranged in the same field at the same time, the amount of energy received by each of the NFC targets may not be enough to allow for a reliable operation of the NFC communication.

There is a need to provide a near field communication system having an improved performance.

This problem is solved by a system according to claim 1 and a method according to claim 10. Configurations and further developments of the invention are the subject of the dependent claims.

A near field communication system includes a near field communication controller, a first antenna coupled to and controlled by the near field communication controller and configured to generate an electromagnetic field having a frequency of 13.56MHz, a voltage regulator configured to provide an operating voltage to the near field communication controller, a second arranged in the electromagnetic field generated by the first antenna, and an evaluation unit coupled to the second antenna and configured to determine a voltage induced in the second antenna by the electromagnetic field generated by the first antenna. The evaluation unit is configured to provide a feedback signal to the voltage regulator, the feedback signal being dependent on the voltage induced in the second antenna, the voltage regulator is configured to vary the operating voltage based on the feedback signal, and the field strength of the electromagnetic field generated by the first antenna depends on the operating voltage.

This allows to adapt the electromagnetic field generated by the first antenna to a current load situation of the electromagnetic field.

The operating voltage provided by the voltage regulator can be between 2.3V and 5V.

The voltage regulator can receive an input voltage of 5V.

The voltage induced in the second antenna depends on a number of near field communication targets present in the electromagnetic field generated by the first antenna.

This is, because each NFC target receives a portion of the energy of the electromagnetic field. This portion decreases if the number of NFC targets in the electromagnetic field increases.

The voltage regulator can be configured to increase the operating voltage if the voltage induced in the second antenna indicates that a number of near field communication devices present in the electromagnetic field is greater than a predetermined threshold, and decrease the operating voltage if the voltage induced in the second antenna indicates that the number of near field communication devices present in the electromagnetic field is lower or equal to the predetermined threshold.

In this way, even a large number of NFC targets can be reliably detected, losses can be reduced, and a communication can be started with each of a plurality of NFC targets. When only few NFC targets are detected within the electromagnetic field, the strength of the field can be reduced in order to reduce EMC (electromagnetic compatibility) emissions.

The voltage regulator can be further configured to increase the operating voltage if the voltage induced in the second antenna is lower than a predetermined threshold, and decrease the operating voltage if the voltage induced in the second antenna is equal to or larger than the predetermined threshold.

In this way, even a large number of NFC targets can be reliably detected, losses can be reduced, and a communication can be started with each of a plurality of NFC targets. When only few NFC targets are detected within the electromagnetic field, the strength of the field can be reduced in order to reduce EMC (electromagnetic compatibility) emissions

The evaluation unit can include a rectifier configured to rectify the voltage induced in the second antenna, and a capacitor configured to smooth the rectified voltage.

The rectified and smoothed voltage can be provided to the voltage regulator as the feedback signal.

In this way a feedback on the current load situation can be provided to the voltage regulator and the output voltage and, therefore, the strength of the electromagnetic field generated by the first antenna can be varied accordingly.

The evaluation unit can further comprise a microcontroller configured to receive an information concerning the voltage induced in the second antenna, and to generate a feedback signal based on the induced voltage.

This is an alternative way to provide feedback on the current load situation to the voltage regulator and to vary the output voltage and, therefore, the strength of the electromagnetic field generated by the first antenna accordingly.

A field strength of the electromagnetic field generated by the first antenna can be at least 1.5 A/m.

In this way a NFC communication can be reliably enabled.

A method includes generating an electromagnetic field having a frequency of 13.56MHz by means of a first antenna, the first antenna being coupled to and controlled by a near field communication controller, determining, by means of an evaluation unit, a voltage induced in a second antenna by the electromagnetic field generated by the first antenna, providing a feedback signal to a voltage regulator, the feedback signal being dependent on the voltage induced in the second antenna, and providing, by means of the voltage regulator, an operating voltage to the near field communication controller, wherein the operating voltage is varied based on the feedback signal, and the field strength of the electromagnetic field generated by the first antenna depends on the operating voltage.

Examples are now explained with reference to the drawings. In the drawings the same reference characters denote like features.
Figure 1 schematically illustrates in a block diagram a near field communication system according to one example.
Figure 2 schematically illustrates a printed circuit board of a near field communication system according to one example.
Figure 3 schematically illustrates a method according to an example.

In the following Figures, only such elements are illustrated that are useful for the understanding of the present invention. The system described below may comprise more than the exemplary elements illustrated in the Figures. However, any additional elements that are not needed for the implementation of the present invention have been omitted for the sake of clarity.

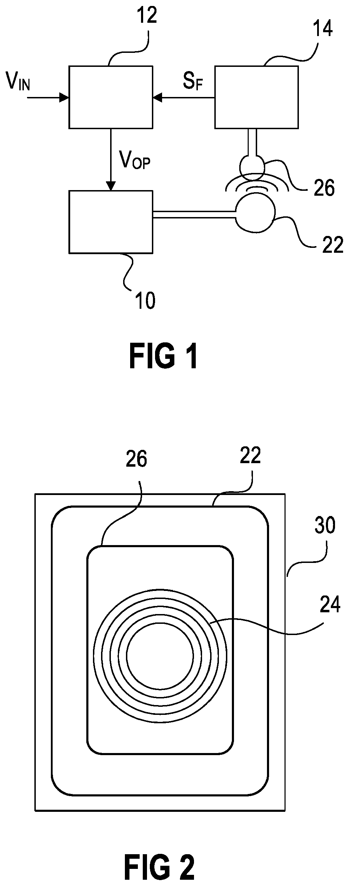

Figure 1 illustrates a system for near field communication (NFC). NFC is a technology that is used to provide short-range wireless connectivity for a two-ways interaction between electronic devices. NFC is promoted and maintained by the NFC Forum, a non-profit industry association created with the goal of advancing the use of NFC technology in consumer electronics, mobile devices and PCs. The NFC Forum promotes the implementation and standardization of NFC technology to ensure interoperability between devices and services. NFC is a flavor of RFID (radio-frequency identification), with an additional, specific set of standards ensuring interoperability of NFC-enabled equipment. NFC standards determine, among other things, the operating environment, data formats, transfer rates, and the modulation.

NFC uses inductive coupling between NFC devices, and operates with electromagnetic fields at 13.56MHz, which is a license-free allocation in the HF portion of the radio spectrum. An NFC device can draw power from the field generated by another NFC device, thus making it independent of a power supply. The NFC device can be implemented in small objects such as tags, stickers, key remote controls or cards.

Nearfield communication defines two types of NFC devices. These are known as initiators and targets. The initiator is the device that initiates the communication. It also controls the data exchange. The target is the device that responds to the request from the initiator and accepts the communication with the initiator to happen.

When a plurality of NFC targets is present in the same electromagnetic field, each of the NFC targets receives a certain amount of energy from the electromagnetic field to supply the internal electronics of the respective NFC target. If several NFC targets are arranged in the same field at the same time, the amount of energy received by each of the NFC targets, however, may not be enough to allow for a reliable operation of the NFC communication.

Many devices today can be charged wirelessly, i.e., inductively. That is, energy is transferred from a first device to a second device inductively. Usually a wireless charger base station generates an electromagnetic field by means of a first antenna. A portable device comprising a second antenna can be charged if the second antenna is arranged close to the first antenna (i.e., in the electromagnetic field).

Wireless charger base stations are often also able to communicate via near field communication (NFC). However, when a plurality of NFC targets (e.g., NFC tags or cards) are arranged in the electromagnetic field generated by the base station simultaneously or if one or more NFC targets are arranged in the electromagnetic field at the same time as a portable electronic device that is to be charged, the NFC reader arranged in the base station may not be able to reliably detect all NFC targets.

In known wireless charging systems, the wireless charging base station is usually the initiator. The base station searches for other NFC devices in its surroundings, in particular in the proximity of an antenna within the base station which generates the electromagnetic field. If another NFC device is detected, a near field communication can be initiated.

The near field communication system illustrated in Figure 1 comprises a first antenna 22 that is configured to generate an electromagnetic field for near field communication. A NFC controller 10 is coupled to the first antenna 22 and is configured to control the first antenna 22, to send data via the first antenna 22 to a NFC target, and to receive data from a NFC target via the first antenna 22.

The near field communication system further comprises a second antenna 26 that is configured to detect a strength of the electromagnetic field generated by the first antenna 22. The strength of the electromagnetic field detected by the second antenna 26 depends, inter alia, on the number of NFC targets present in the electromagnetic field generated by the first antenna 22. As has been explained above, the second antenna 26 receives a portion of the energy provided by the electromagnetic field. This portion is larger when no or only few other NFC targets are present in the electromagnetic field, and is smaller when many different NFC targets are present in the electromagnetic field.

The second antenna 26 is coupled to an evaluation unit 14. The electromagnetic field generated by the first antenna 22 induces a voltage in the second antenna 26. The evaluation unit 14 is configured to determine this voltage which depends on the strength of the electromagnetic field received by the second antenna 26. The evaluation unit 14 is coupled to a voltage regulator 12. The voltage regulator 12 is configured to supply an operating voltage V_{OP} to the NFC controller 10. An input voltage V_{IN} of the voltage regulator can be 5V, for example. The operating voltage V_{OP} (output voltage) provided by the voltage regulator 12 is variable. According to one example, the voltage regulator 12 can provide an operating voltage V_{OP} of between 2.3V and 5V.

The operating voltage V_{OP} depends on the voltage determined by the evaluation unit 14. For example, when the voltage is large (no or only few NFC targets detected in the electromagnetic field), the voltage regulator 12 can output a lower operating voltage V_{OP}. This results in an electromagnetic field generated by the first antenna 22 that is comparably weak. When the voltage determined by the evaluation unit 14 is small (several NFC targets detected in the electromagnetic field), the voltage regulator 12 can output a higher operating voltage V_{OP}. This results in an electromagnetic field generated by the first antenna 22 that is comparably strong. In this way, even a large number of NFC targets can be reliably detected, losses can be reduced, and a communication can be started with each of a plurality of NFC targets. When only few NFC targets are detected within the electromagnetic field, the strength of the field can be reduced in order to reduce EMC (electromagnetic compatibility) emissions. The strength of the electromagnetic field generated by the first antenna 22 therefore is controlled by means of a closed loop regulation. According to one example, the field strength of the electromagnetic field generated by the first antenna 22 may not be less than 1.5 A/m in order to guarantee the reliable operation of the near field communication system.

The evaluation unit 14 can comprise a rectifier, for example. The voltage induced in the second antenna 26 can be rectified by means of the rectifier. The rectified voltage can further be smoothed by means of a capacitor included in the evaluation unit 14.

The resulting rectified and smoothed voltage can be provided to the voltage regulator 12 as a feedback signal S_{F}. The feedback signal S_{F} controls the operating voltage V_{OP} output by the voltage regulator 12.

According to another example, the evaluation unit 14 further comprises a microcontroller which receives the information concerning the voltage induced in the second antenna 26. The microcontroller can then generate a feedback signal S_{F} based on the induced voltage.

The near field communication system that has been described with respect to Figure 1 above can be included in a wireless charging system. A wireless charging system usually comprises a printed circuit board (PCB) 30. Different components of the wireless charging system can be arranged on the PCB 30. Such components, however, are not specifically illustrated in Figure 2. In Figure 2, a third antenna 24 that is used for wireless charging is schematically illustrated. The third antenna 24 can be a loop antenna comprising a plurality of windings, for example. The third antenna 24 can be implemented by means of a conducting path on the PCB 30. Further, the first antenna 22 can be implemented as a loop antenna on the PCB 30. The first antenna 22 can comprise 3 to 5 windings implemented as conducting paths on the PCB 30, for example. The second antenna 26 that has been described with respect to Figure 1 above can easily be integrated on an existing PCB 30. The second antenna 26 can be a loop antenna comprising a plurality of windings, for example. The second antenna 26 can be implemented by means of a conducting path on the PCB 30. The second antenna 26 can comprise 3 to 5 windings, for example.

It is even possible that the windings of the second antenna 26 and the windings of the third antenna 24 overlap to a certain degree. The different antennas can be arranged in different layers of the PCB 30, for example.

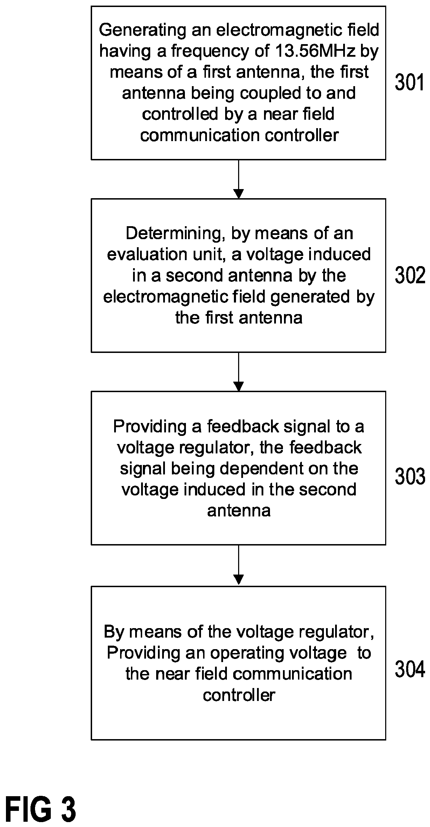

Now referring to Figure 3, a method according to one example is schematically illustrated. The method comprises generating an electromagnetic field having a frequency of 13.56MHz by means of a first antenna, the first antenna being coupled to and controlled by a near field communication controller (step 301). The method further comprises determining, by means of an evaluation unit, a voltage induced in a second antenna by the electromagnetic field generated by the first antenna (step 302). A feedback signal is then provided to a voltage regulator (step 303), the feedback signal being dependent on the voltage induced in the second antenna. By means of the voltage regulator, an operating voltage is provided to the near field communication controller (step 304), wherein the operating voltage is varied based on the feedback signal, and the field strength of the electromagnetic field generated by the first antenna depends on the operating voltage.

### List of reference signs

- 10: NFC controller
- 12: voltage regulator
- 14: evaluation unit
- 22: first antenna
- 24: third antenna
- 26: second antenna
- 30: printed circuit board
- V_{IN}: input voltage
- V_{OP}: operating voltage
- S_{F}: feedback signal

## Claims

1. A near field communication system comprising
a near field communication controller (10);
a first antenna (22) coupled to and controlled by the near field communication controller (10) and configured to generate an electromagnetic field having a frequency of 13.56MHz;
a voltage regulator (12) configured to provide an operating voltage (V_{OP}) to the near field communication controller (10);
a second antenna (26) arranged in the electromagnetic field generated by the first antenna (22); and
an evaluation unit (14) coupled to the second antenna (26) and configured to determine a voltage induced in the second antenna (26) by the electromagnetic field generated by the first antenna (22), wherein
the evaluation unit (14) is configured to provide a feedback signal (S_{F}) to the voltage regulator (12), the feedback signal (S_{F}) being dependent on the voltage induced in the second antenna (26),
the voltage regulator (12) is configured to vary the operating voltage (V_{OP}) based on the feedback signal (S_{F}), and
the field strength of the electromagnetic field generated by the first antenna (22) depends on the operating voltage (V_{OP}).

2. The near field communication system of claim 1, wherein the operating voltage (V_{OP}) provided by the voltage regulator (12) is between 2.3V and 5V.

3. The near field communication system of claim 1 or 2, wherein the voltage regulator (12) receives an input voltage (V_{IN}) of 5V.

4. The near field communication system of any of claims 1 to 3, wherein the voltage induced in the second antenna (26) depends on a number of near field communication targets present in the electromagnetic field generated by the first antenna (22).

5. The near field communication system of claim 4, wherein the voltage regulator (12) is configured to
increase the operating voltage (V_{OP}) if the voltage induced in the second antenna (26) indicates that a number of near field communication devices present in the electromagnetic field is greater than a predetermined threshold; and
decrease the operating voltage (V_{OP}) if the voltage induced in the second antenna (26) indicates that the number of near field communication devices present in the electromagnetic field is lower or equal to the predetermined threshold.

6. The near field communication system according to claim 4 or 5, wherein the voltage regulator (12) is configured to
increase the operating voltage (V_{OP}) if the voltage induced in the second antenna (26) is lower than a predetermined threshold; and
decrease the operating voltage (V_{OP}) if the voltage induced in the second antenna (26) is equal to or larger than the predetermined threshold.

7. The near field communication system according to any of the preceding claims, wherein the evaluation unit (14) comprises a rectifier configured to rectify the voltage induced in the second antenna (22), and a capacitor configured to smooth the rectified voltage.

8. The near field communication system of claim 7, wherein the rectified and smoothed voltage is provided to the voltage regulator (12) as the feedback signal (S_{F}).

9. The near field communication system of claim 7, wherein the evaluation unit (14) further comprises a microcontroller configured to receive an information concerning the voltage induced in the second antenna (26), and to generate a feedback signal (S_{F}) based on the induced voltage.

10. The near field communication system of any of claims 1 to 9, wherein a field strength of the electromagnetic field generated by the first antenna (22) is at least 1.5 A/m.

11. A method comprising:
generating an electromagnetic field having a frequency of 13.56MHz by means of a first antenna (22), the first antenna being coupled to and controlled by a near field communication controller (10);
determining, by means of an evaluation unit (14), a voltage induced in a second antenna (26) by the electromagnetic field generated by the first antenna (22),
providing a feedback signal (S_{F}) to a voltage regulator (12), the feedback signal (S_{F}) being dependent on the voltage induced in the second antenna (26); and
providing, by means of the voltage regulator (12), an operating voltage (V_{OP}) to the near field communication controller (10), wherein
the operating voltage (V_{OP}) is varied based on the feedback signal (S_{F}), and
the field strength of the electromagnetic field generated by the first antenna (22) depends on the operating voltage (V_{OP}).
